# EUROPÄISCHE PATENTSCHRIFT

(11) **EP 0 783 758 B1**
(45) Veröffentlichungstag und Bekanntmachung des Hinweises auf die Patenterteilung: **22.07.1998**
(21) Anmeldenummer: 95930464.3
(22) Anmeldetag: 16.08.1995
(51) Int. Cl.: H01B 1/02, H01B 1/24, H01B 1/22

(54) **VERWENDUNG EINES HALBZEUGS ODER FERTIGTEILS AUS EINEM SCHICHTWERKSTOFF ALS ELEKTRISCHE KONTAKTFEDER.**
USE OF A SEMI-FINISHED OR FINISHED ARTICLE MADE OF LAYERED MATERIAL AS A CONTACT SPRING.
UTILISATION D'UN PRODUIT FINI OU SEMI-FINI EN UN MATERIAU STRATIFIE COMME LAMME DE CONTACT.

(30) Priorität: 26.09.1994 DE 4434217
(43) Veröffentlichungstag der Anmeldung: 16.07.1997
(73) Patentinhaber: DODUCO GmbH, 75181 Pforzheim (DE)
(72) Erfinder: KRUG, Hans, D-75210 Keltern (DE)
(74) Vertreter: Twelmeier, Ulrich, Dipl.Phys.
(86) Internationale Anmeldenummer: EP9503240
(87) Internationale Veröffentlichungsnummer: WO9610259

(56) Entgegenhaltungen:
- EP-A- 0 600 787
- DE-A- 3 936 511
- DE-A- 4 300 562
- GB-A- 2 273 940
- DATABASE WPI Section Ch, Week 9314 Derwent Publications Ltd., London, GB; Class A32, AN 93-112461 & JP,A,05 050 553 ( KAWASAKI STEEL CORP) , 2.März 1993

## Beschreibung

Die Erfindung befaßt sich mit der Verwendung eines Halbzeugs oder Fertigteils aus einem Schichtwerkstoff als elektrische Kontakfeder. Ein solches Halbzeug ist aus der GB 22 73 940 A bekannt und dient dort dazu, Schaltungsträgerplatten mit einem carbonfaserhaltigen Substrat herzustellen und dabei auch nicht ebene Substrate zu ermöglichen. Ähnliches offenbart die EP 0 600 787 A1. Die DE 43 00 562 A1 und die DE 39 36 511 A1 offenbaren carbonfaserhaltige Platten bzw. Gehäuse zum Abschirmen von elektromagnetischen Wellen.

Für die elektrische Stromleitung besonders geeignete Metalle wie Silber und Kupfer haben eine hohe elektrische Leitfähigkeit, aber eine geringe Härte, geringe Festigkeit und schlechte Federeigenschaften. Für viele elektrische Anwendungsfälle, beispielsweise für die Verwendung als Kontaktfedern, werden jedoch zusätzlich zur guten elektrischen Leitfähigkeit auch hohe Härte, hohe Festigkeit und gute Federeigenschaften gefordert. Erzeugt man aus den Metallen mit guter elektrischer Leitfähigkeit Legierungen, so kann man die mechanischen Eigenschaften dadurch verbessern, doch verschlechtert sich gleichzeitig die elektrische Leitfähigkeit, abhängig von der Art und Menge der Legierungszusätze, rapide. Eine andere bekannte Möglichkeit, zu Halbzeugen oder Fertigteilen mit hoher elektrischer Leitfähigkeit und guten mechanischen Eigenschaften zu kommen, ist die Herstellung von Bimetallen. Dabei werden Metalle mit hoher elektrischer Leitfähigkeit auf Metalle mit den gewünschten mechanischen Eigenschaften plattiert. Dafür gibt es unterschiedliche plattierverfahren, zum Beispiel das Kaltwalzverfahren für das Herstellen von Bimetallbändern, die je nach dem Herstellungsverfahren relativ hohe Kosten bei der Herstellung und Weiterverarbeitung verursachen. Insbesondere in Anwendungen, in denen schwache Ströme zu leiten und zu schalten sind, in elektronischen Schaltungen, die in großen Stückzahlen hergestellt werden, besteht ein starker Kostendruck, der nach immer preiswerteren Lösungen für Kontaktfedern und andere Halbzeuge oder Fertigteile für Zwecke der elektrischen Stromleitung und/oder der elektrischen Kontaktgabe verlangt, in denen eine gute elektrische Leitfähigkeit kombiniert ist mit günstigen mechanischen Eigenschaften, insbesondere Federeigenschaften.

Der vorliegenden Erfindung liegt die Aufgabe zugrunde, Halbzeuge und Fertigteile zu verwenden, die den geschilderten Anforderungen gerecht werden.

Diese Aufgabe wird gelöst durch Halbzeuge und Fertigteile mit den im Anspruch 1 angegebenen Merkmalen.

Die erfindungsgemäßen verwendeten Halbzeuge bzw. Fertigteile bestehen aus einem Schichtwerkstoff, in welchem eine Schicht eine Metallschicht ist, die nach ihren elektrischen Eigenschaften ausgewählt ist, so daß sie die Anforderungen an die elektrische Stromleitung und/oder Kontaktgabe erfüllt. Der Schichtwerkstoff ist jedoch kein reiner Metallwerkstoff, sondern enthält als wesentlichen Bestandteil, der die mechanischen Eigenschaften überwiegend bestimmt, eine Schicht aus Carbonfasern, die durch ein Bindemittel auf Kunststoffbasis zusammengehalten werden. Für die erwünschten mechanischen Eigenschaften dieser Schicht sind vor allem die Carbonfasern verantwortlich, die deshalb in dieser Schicht mengenmäßig überwiegen sollen. Der Kunststoffanteil in der Schicht soll vorzugsweise nur so hoch sein wie erforderlich, um einen Zusammenhalt der Schicht zu gewährleisten. Ein Carbonfaseranteil von 60 % ist gut geeignet.

Die Carbonfasern zeichnen sich durch eine Zugfestigkeit von ca. 2000 N/mm² und ein E-Modul von ca. 130 kN/mm² aus, Eigenschaften, die denen eines hochlegierten Federstahles ähnlich sind. In Kombination mit dem Kunststoff-Bindemittel, für welches sich insbesondere Kunstharze (z. B. Epoxidharze, Phenolharze, Polyurethane und Acrylharze) eignen, aber auch Schmelzkleber und andere Kleber, erhält der Schichtwerkstoff zusätzliche vorteilhafte mechanische Eigenschaften. Für den Schichtwerkstoff und daraus hergestellte Halbzeuge und Fertigteile können eine ganze Reihe von Vorteilen geltend gemacht werden:
- Man erhält optimale elektrische Eigenschaften, weil man in der Auswahl des Metalls für die gut leitfähige Schicht nicht eingeschränkt ist.
- Die aus dem Schichtwerkstoff bestehenden Halbzeuge und Teile haben eine hohe Steifigkeit.
- Die aus dem Schichtwerkstoff bestehenden Halbzeuge und Teile haben eine hohe mechanische Festigkeit.
- Die aus dem Schichtwerkstoff bestehenden Halbzeuge und Teile haben einen hohen Elastizitätsmodul und eignen sich deshalb besonders für Kontaktfedern.
- Die guten Federeigenschaften sind kombiniert mit einer hohen Schwingfestigkeit und einer hohen Ermüdungsfestigkeit.
- Die aus dem Schichtwerkstoff bestehenden Halbzeuge und Teile zeichnen sich durch eine verglichen mit Bimetallen niedrige Masse aus, weil die Carbonfaserschicht eine verglichen mit den metallischen Federwerkstoffen niedrige Dichte von nur 1,5 - 1,7 g/cm³ hat. Geringere Masse bei hohen Federkräften wirkt sich günstig auf das Prellverhalten aus.
- Schwingungen von Kontaktfedern aus einem erfindungsgemäßen Schichtwerkstoff sind stärker gedämpft als bei metallischen Kontaktfedern, was ebenfalls günstig ist für das Prellverhalten.
- Die Carbonfaserschichten zeigen eine gute Korrosionsbeständigkeit.
- Die Carbonfaserschichten zeigen eine geringe Wärmeausdehnung. Der Wärmeausdehnungskoeffizient in Längsrichtung der Carbonfaser beträgt lediglich 0,5 x 10⁻⁶ /K. Auf diese Weise können insbesondere mit Kupferwerkstoffen, die einen relativ hohen Wärmeausdehnungskoeffizienten haben (bei Kupfer 16,5 x 10⁻⁶/K), Kontaktfedern hergestellt werden, die als Ersatz für Thermobimetalle eingesetzt werden können und hohe Kontaktkraft mit hohem Kontakthub verbinden, der günstig ist für wohldefinierte Schalttemperaturen. Damit hergestellte Thermobimetallschalter können ohne weiteres bis zu Temperaturen von 140°C eingesetzt werden und decken damit den weitaus größten Einsatzbereich von Thermobimetallschaltern ab.
- Die Carbonfaserschicht ist stromleitend; der spezifische elektrische Widerstand der Carbonfaser beträgt etwa 18 Ω µm. Diese vorhandene elektrische Leitfähigkeit macht es möglich, die Carbonfaser/Kunststoffschicht nicht nur durch Kleben mit einer Metallschicht, insbesondere einer Metallfolie, zu verbinden, sondern eröffnet die Möglichkeit, die Carbonfaser/Kunststoffschicht unmittelbar elektrolytisch mit Metall zu beschichten, wodurch einerseits ein fester Verbund erzielt wird, andererseits mit sparsamstem Metalleinsatz gearbeitet werden kann, was insbesondere dann von Bedeutung ist, wenn elektrisch gut leitende Edelmetalle verwendet werden, zumal auch die in der elektrolytischen Beschichtungstechnik üblichen selektiven Beschichtungsverfahren zur Anwendung kommen können, welche die Carbonfaser/Kunststoffschichten nicht vollflächig, sondern nur in Teilbereichen der Oberfläche, dort, wo es wirklich erforderlich ist, beschichten. Alle in der Elektroindustrie üblichen Metalle wie Kupfer, Nickel, Silber, Gold usw. lassen sich auf diese Weise auf den Carbonfaser/Kunststoffschichten abscheiden. Moderne elektrolytische Abscheideverfahren sind sehr preiswert, so daß man auf diese Weise zu außerordentlich preiswerten Halbzeugen und Fertigteilen kommt.

Zusätzlich zur elektrolytischen Abscheidung ist auch ein Beschichten durch Sputtern oder Aufdampfen (PVD) möglich, wenn dabei Arbeitstemperaturen von etwa 180°C nicht überschritten werden. Vorzugsweise werden nur Schichten unter 1 µm Dicke gesputtert oder aufgedampft als Grundlage für eine nachfolgende elektrolytische Beschichtung, welche preiswerter ist als eine Abscheidung durch Sputtern oder Aufdampfen.

Ob die erfindungsgemäßen verwendeten Halbzeuge und Fertigteile nun durch elektrolytisches Plattieren, durch Aufdampfen oder Besputtern von Carbonfaser/Kunststoffschichten gebildet werden, oder ob die Carbonfaser/Kunststoffschichten mit Metallfolien plattiert sind, günstig ist, daß sie problemlos gestanzt werden können, so daß man preisgünstig bandförmige und/oder tafelförmige Halbzeuge herstellen und aus diesen Einzelteile, zum Beispiel Kontaktfedern, ausstanzen kann. Die Stanzbarkeit macht es ferner möglich, elektrische Kontaktstücke aufzunieten. Da die Metallschicht, welche eine hohe elektrische Leitfähigkeit hat, auch eine hohe Wärmeleitfähigkeit hat, können die Teile bzw. Halbzeuge auch kurzzeitig lokal auf Temperaturen erhitzt werden, welche die thermische Beständigkeit des Kunststoffbindemittels übersteigen. Es hat sich gezeigt, daß deshalb Kontaktteile auch durch Weichlöten und Laserschweißen angebracht werden können.

Will man dreidimensionale, das heißt nicht ebene Formteile herstellen, dann geht man vorzugsweise so vor, daß man die Carbonfasern mit einem wärmehärtbaren Kunstharz tränkt, dann mit einem Formwerkzeug in die gewünschte Form preßt und anschließend das wärmehärtbare Kunstharz, zum Beispiel ein Epoxidharz, durch Wärmebehandlung aushärtet, wodurch die gewünschte Form stabilisiert wird. Eine Metallbeschichtung, zum Beispiel durch elektrolytische Metallabscheidung, kann danach erfolgen. Es besteht aber auch die Möglichkeit, vor der Formgebung einseitig oder beidseitig eine Metallfolie aufzulegen und in ein und demselben Formgebungsvorgang mit dem noch nicht ausgehärteten Kunstharz zu verkleben und die Klebeverbindung durch das anschließende Wärmeaushärten dauerhaft zu gestalten.

Soweit mit der Carbonfaser/Kunststoffschicht Metallfolien verbunden werden, können diese mit der Schicht nicht nur nachträglich verklebt werden, sie können auch beim Infiltrieren der Carbonfaserschicht angegossen werden.

Die gewünschten mechanischen Eigenschaften können nicht nur durch Auswahl der Dicke der Carbonfaser/Kunststoffschicht und durch Auswahl des Kunststoffbindemittels eingestellt werden, sondern auch dadurch, daß Vielfach-Laminate hergestellt werden. So sind zum Beispiel Schichtwerkstoffe möglich, in denen zwei oder mehr metallische Schichten und zwei oder mehr Carbonfaser/Kunststoffschichten miteinander abwechseln, wobei die Metallschichten unterschiedlich sein können und die Carbonfaser/Kunststoffschichten unterschiedlich dick sein können, die Carbonfasern auch unterschiedlich orientiert sein können. Auf diese Weise sind vielfältige Anpassungen an unterschiedliche Einsatzzwecke möglich. Auch sogenannte genutete Bänder oder abgestufte Bänder, die auf reiner Metallbasis nur relativ aufwendig herstellbar sind, sogar Kastenprofile, die zu sehr leichten, aber dennoch steifen Teilen führen, sind preiswert herstellbar.

Wenn gewünscht, kann sogar die Leitfähigkeit der Carbonfaser/Kunststoffschicht ohne größeren Aufwand erhöht werden, nämlich dadurch, daß man in den Kunststoff ein leitfähiges Metallpigment einmischt, oder dadurch, daß man den Carbonfasern Metallfasern beimischt, die durchgehende Strompfade bilden. An der Art der Herstellung und Verarbeitung der Teile ändert sich dadurch nichts.

Ausführungsbeispiele der Erfindung sind in den beigefügten Zeichnungen dargestellt und werden nachstehend beschrieben.
- Die Figuren 1-8: zeigen unterschiedlich aufgebaute bandförmige Halbzeuge gemäß der Erfindung in einer Schrägansicht, und
- Figur 9: zeigt eine gebogene Kontaktfeder in einer Seitenansicht.

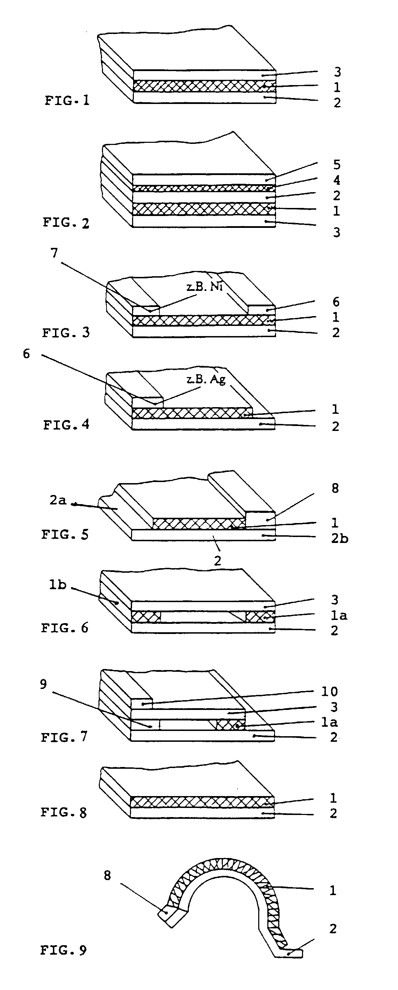

- Figur 1: zeigt ein ebenes bandförmiges Halbzeug, bestehend aus einer Carbonfaserschicht 1 mit einem Kunstharzbindemittel, welche beidseitig eine Metallschicht 2 und 3 trägt. Die eine Schicht 2 könnte beispielsweise aus Silber bestehen, die andere Schicht 3 aus Kupfer. Die Schichten 2 und 3 können der getrennten Stromführung dienen.
Aus dem bandförmigen Halbzeug können durch Querteilen Kontaktfedern gebildet werden. Verlaufen die Carbonfasern in nur einer Richtung, dann wird das Halbzeug zweckmäßigerweise parallel zu dieser Richtung geteilt, um Kontaktfedern zu bilden.
- Figur 2: zeigt ein bandförmiges ebenes Halbzeug, welches aus fünf Schichten gebildet ist. Eine dickere Carbonfaserschicht 1 mit Kunstharzbindemittel ist auf der einen Seite mit einer Metallschicht 2, z. B. aus Aluminium, und auf der anderen Seite mit einer Metallschicht 3, z. B. aus Kupfer, abgedeckt. Auf der Metallschicht 2 liegt eine weitere Carbonfaserschicht 4 mit einem Kunstharzbindemittel, welche dünner ist als die Schicht 1. Auf der Carbonfaserschicht 4 liegt schließlich eine dritte Metallschicht 5, z. B. aus Silber. Die Metallschichten 2, 3 und 5 können getrennt stromführend sein, wenn die Schichten durch elektrisch isolierende Klebstoffe miteinander verbunden sind, sie können aber auch gemeinsam stromführend sein, wobei die innenliegende Schicht 2 durchaus aus einem unedlen Metall wie Aluminium bestehen darf, da die Oberfläche durch die Beschichtung geschützt ist.
- Figur 3: zeigt ein bandförmiges Halbzeug, welches sich von dem in Figur 1 dargestellten Halbzeug darin unterscheidet, daß die eine, in Figur 1 flächendeckend vorgesehene Metallschicht 3 ersetzt ist durch zwei schmale Randstreifen 6 und 7 zur Bildung eines genuteten Bandes, auch als Toplay-Profil bezeichnet, wobei der Streifen 6 aus Silber, der Streifen 7 aus Nickel bestehen könnte, z. B. als Grundlage für eine nachfolgende selektive Vergoldung. Solche Profile sind herkömmlich nur aufwendig herstellbar, z. B. durch vollflächiges Walzplattieren eines Trägerbandes und anschließendes Herausfräsen des nicht benötigten Materials, insbesondere aber durch fortlaufendes Auflöten der Randstreifen auf ein Trägerband.
Erfindungsgemäß lassen sich die Randstreifen z. B. aufkleben, am besten mit dem Kunstharz, der für das Zusammenhalten der Carbonfaserschicht 1 ohnehin benötigt wird. Als Bindemittel kann jedes Bindemittel eingesetzt werden, welches sich sowohl mit den Carbonfasern als auch mit dem gewünschten Metall verbindet. Es ist aber auch durchaus möglich, für den Zusammenhalt der Carbonfaserschicht und für das Verbinden der Carbonfaserschicht mit dem Metall unterschiedliche Bindemittel (Klebstoffe) einzusetzen.
- Das in Figur 4: dargestellte bandförmige Halbzeug unterscheidet sich von dem in Figur 1 dargestellten darin, daß die eine Metallschicht 2, welche die Carbonfaserschicht 1 vollflächig abdeckt, über diese übersteht, z. B. zur Bildung eines schweißbaren Vorsprungs, wohingegen die andere Seite der Carbonfaserschicht 1 nicht vollflächig abgedeckt ist, sondern nur einen Randstreifen 6 zur Bildung einer kontaktgebenden Schicht, z. B. aus Silber, trägt. Die Schicht 2 könnte aus Nickel bestehen.
- Das in Figur 5: dargestellte bandförmige Halbzeug unterscheidet sich von dem in Figur 4 dargestellten Halbzeug dahingehend, daß die Metallschicht 2, welche die Carbonfaserschicht 1 vollflächig abdeckt, beidseitig über diese übersteht, wobei der eine Fortsatz 2a z. B. für eine Löt-, Klemm- oder Schraubverbindung herangezogen werden kann, wobei der andere Überstand 2b einen Metallstreifen 8 aufnimmt, welcher über die zweite Seite der Carbonfaserschicht 1 übersteht und - nach Querteilung des bandförmigen Halbzeugs - als Kontaktstück dienen kann. Die Metallschicht 2 könnte aus Kupfer, der Metallstreifen 8 aus Silber bestehen. Durch die direkte Verbindung der Schichten 2 und 8 miteinander erfolgt durch die Carbonfaserschicht 1 nur ein geringer Stromfluß. Die Carbonfaserschicht hat praktisch nur eine mechanische Funktion, sie bestimmt wesentlich die mechanischen Eigenschaften von Kontaktfedern, die durch Querteilen aus dem bandförmigen Halbzeug gebildet werden; insbesondere erhöht sie deren Steifigkeit, Härte und Federwirkung.
- Das in Figur 6: dargestellte bandförmige Halbzeug unterscheidet sich von dem in Figur 1 dargestellten Halbzeug darin, daß die durchgehende Carbonfaserschicht 1 ersetzt worden ist durch zwei schmale Carbonfaserstreifen la und 1b, wodurch ein kastenförmiges Hohlprofil entsteht, welches einerseits sehr steif und stabil, andererseits extrem leicht ist. Es kann dadurch gebildet werden, daß zwei Metallbänder 2 und 3 unter Zwischenfügen der beiden Streifen la und 1b miteinander verklebt werden.
- Das in Figur 7: dargestellte bandförmige Halbzeug unterscheidet sich von dem in Figur 6 dargestellten darin, daß einer der Carbonfaserstreifen 1b durch einen schmalen Metallstreifen 9 ersetzt ist, daß das untere Metallband 2 einseitig übersteht, wie in dem Ausführungsbeispiel in Figur 4, und daß das andere Metallband 3 auf seiner Oberseite nochmals einen Metallstreifen 10 trägt, welcher zur Kontaktgabe herangezogen werden kann. Die Metallbänder 2 und 3 sowie der Metallstreifen 9 könnten aus Kupfer bestehen, der Metallstreifen aus Silber. Bei einem solchen Aufbau kann man mit geringstem Metalleinsatz sehr steife Kontaktfedern erhalten.
- Das in Figur 8: dargestellte Ausführungsbeispiel unterscheidet sich von dem in Figur 1 dargestellten darin, daß die Carbonfaser/Kunststoff-Schicht 1 nur einseitig eine Metallschicht 2 trägt. Die Schicht 2 könnte, wie auch andere Metallschichten in den vorhergehenden Beispielen, mit der Carbonfaserschicht 1 verklebt sein, aber auch durch elektrolytische Metallabscheidung, gegebenenfalls nach vorhergehender Metallbedampfung oder Metallbesputterung, gebildet werden.
- Das in Figur 9: dargestellte Ausführungsbeispiel unterscheidet sich von dem in Figur 5 dargestellten darin, daß es einem Formgebungsverfahren unterzogen wurde, und zwar vor dem Aushärten des Bindemittels in der Carbonfaserschicht 1. Dazu kann man so vorgehen, daß man als Bindemittel ein wärmehärtbares Kunstharz einsetzt, damit eine ebene, bandförmige Carbonfaserschicht 1 gebildet wird, welche durch das noch nicht ausgehärtete Bindemittel zusammengehalten wird, diese Schicht zu einem Zeitpunkt, zu welchem das Bindemittel auch noch gegenüber Metall bindefähig ist, mit einer Metallfolie belegt, welche bereits den Metallstreifen 8 trägt, und sie anpreßt, vorzugsweise in einem Gesenk, in welchem die in Figur 9 dargestellte Formgebung erzeugt wird. Anschließend härtet man das wärmehärtbare Kunstharz aus, wodurch die gewünschte Form stabilisiert wird.

## Patentansprüche

1. Verwendung eines Halbzeugs oder Fertigteils aus einem Schichtwerkstoff, in welchem eine Schicht (1) aus Carbonfasern, die durch ein Bindemittel auf Kunststoffbasis zusammengehalten werden, wenigstens einseitig eine Metallschicht (2, 3, 5-7) trägt, als elektrische Kontaktfeder.

2. Verwendung nach Anspruch 1, **dadurch gekennzeichnet**, daß die Carbonfasern sich in einer ausgeprägten Vorzugsrichtung erstrecken.

3. Verwendung nach Anspruch 1 oder 2 **dadurch gekennzeichnet**, daß der Carbonfaseranteil in der Schicht (1) überwiegt.

4. Verwendung nach einem der vorstehenden Ansprüche, **dadurch gekennzeichnet**, daß die Kunststoffbasis ein Kunstharz ist.

5. Verwendung nach Anspruch 4, **dadurch gekennzeichnet**, daß das Kunstharz ein wärmehärtbares Kunstharz ist und im Halbzeug zunächst ungehärtet vorliegt.

6. Verwendung nach einem der Ansprüche 1-3, **dadurch gekennzeichnet**, daß das Bindemittel ein Schmelzkleber ist.

7. Verwendung nach einem der vorstehenden Ansprüche, **dadurch gekennzeichnet**, daß das Bindemittel Metallpigmente enthält.

8. Verwendung nach einem der vorstehenden Ansprüche, **dadurch gekennzeichnet**, daß die Carbonfasern enthaltende Schicht (1) neben den Carbonfasern auch Metallfasern enthält.

9. Verwendung nach einem der vorstehenden Ansprüche, **dadurch gekennzeichnet**, daß die Metallschicht (2, 3, 5-7) mit der Carbonfasern enthaltenden Schicht (1) verklebt ist.

10. Verwendung nach einem der Ansprüche 1-8, **dadurch gekennzeichnet**, daß die Metallschicht (2, 3, 5-7) unmittelbar auf der Carbonfaser enthaltenden Schicht (1) liegt.

11. Verwendung nach einem der vorstehenden Ansprüche, **dadurch gekennzeichnet**, daß es mehr als eine Carbonfaser-Kunststoff-Verbundschicht (1, 4) enthält, wobei zwischen zwei solchen Verbundschichten eine Metallschicht (Fig.2) liegt.

12. Verwendung nach einem der vorstehenden Ansprüche, **dadurch gekennzeichnet**, daß zwei Carbonfasern enthaltende Schichten, (la, 16) mit Abstand nebeneinander zwischen zwei Metallschichten (2, 3) liegen.

13. Verwendung nach einem der vorstehenden Ansprüche, **dadurch gekennzeichnet**, daß es zwei unterschiedliche carbonfaserhaltige Schichten (1, 4) enthält.

14. Verwendung nach einem der vorstehenden Ansprüche, **dadurch gekennzeichnet**, daß die Schichten sämtlich oder teilweise nicht deckungsgleich sind (Fig.3-7 und 9).

15. Verwendung eines wie in einem der vorstehenden Ansprüche definierten Halbzeugs oder Fertigteils als elektrische Kontaktfeder anstelle von solchen aus Thermobimetallen.

## Claims

1. Use of a semi-finished or finished article made of a multi-layered material, in which a layer (1) of carbon fibers, which is held together by a binder based on plastic, carries a metallic layer (2, 3, 5-7) on at least one side, as an electrical contact spring.

2. The use as defined in Claim 1, wherein the carbon fibers extend in a distinct preferential direction.

3. The use as defined in Claim 1 or 2, wherein the carbon fiber proportion in the layer (1) is predominant.

4. The use as defined in any of the foregoing claims, wherein the plastic basis is a synthetic resin.

5. The use as defined in Claim 4, wherein the synthetic resin is a heat-curable synthetic resin and is initially present in uncured form in the semi-finished article.

6. The use as defined in any of Claims 1 to 3, wherein the binder is a hotmelt adhesive.

7. The use as defined in any of the foregoing claims, wherein the binder contains metal pigments.

8. The use as defined in any of the foregoing claims, wherein the layer (1) containing the carbon fibers contains metal fibers as well as the carbon fibers.

9. The use as defined in any of the foregoing claims, wherein the metal layer (2, 3, 5-7) is adhesively bonded to the layer (1) containing the carbon fibers.

10. The use as defined in any of Claims 1 to 8, wherein the metal layer (2, 3, 5-7) lies directly on the layer (1) ) containing the carbon fibers.

11. The use as defined in any of the foregoing claims, wherein the semi-finished or finished article contains more than one composite carbon fiber/plastic layer (1, 4), a metal layer (Fig. 2) being present between two such composite layers.

12. The use as defined in any of the foregoing claims, wherein two layers (1a, 16) containing carbon fibers are located spaced apart next to one another between two metal layers (2, 3).

13. The use as defined in any of the foregoing claims, wherein it contains two different carbon fiber-containing layers (1, 4).

14. The use as defined in any of the foregoing claims, wherein the layers are entirely or partially noncongruent (Figs. 3-7 and 9).

15. The use of a semi-finished or finished article as defined in any of the foregoing claims as an electrical contact spring in place of those made of thermal bimetallics.

## Revendications

1. Utilisation d'un produit semi-fini ou d'un produit fini constitué par un matériau stratifié dans lequel une couche (1) constituée par des fibres de carbone, qui sont agglomérées via un liant à base d'une matière synthétique, porte, au moins sur une face, une couche métallique (2, 3, 5-7), à titre de lame de contact électrique.

2. Utilisation selon la revendication 1, caractérisée en ce que les fibres de carbone s'étendent dans une direction privilégiée caractéristique.

3. Utilisation selon la revendication 1 ou 2, caractérisée en ce que la fraction des fibres de carbone prédomine dans la couche (1).

4. Utilisation selon l'une quelconque des revendications précédentes, caractérisée en ce que la matière synthétique de base est une résine synthétique.

5. Utilisation selon la revendication 4, caractérisée en ce que la résine synthétique est une résine synthétique thermodurcissable qui est d'abord présente à l'état non durci dans le produit semi-fini.

6. Utilisation selon l'une quelconque des revendications 1 à 3, caractérisée en ce que le liant est une colle à fusion.

7. Utilisation selon l'une quelconque des revendications précédentes, caractérisée en ce que le liant contient des pigments métalliques.

8. Utilisation selon l'une quelconque des revendications précédentes, caractérisée en ce que la couche (1) contenant des fibres de carbone contient, outre les fibres de carbone, également des fibres métalliques.

9. Utilisation selon l'une quelconque des revendications précédentes, caractérisée en ce que la couche métallique (2, 3, 5-7) est collée avec la couche (1) contenant des fibres de carbone.

10. Utilisation selon l'une quelconque des revendications 1 à 8, caractérisée en ce que la couche métallique (2, 3, 5-7) est disposée immédiatement sur la couche (1) contenant des fibres de carbone.

11. Utilisation selon l'une quelconque des revendications précédentes, caractérisée en ce que le produit semi-fini ou le produit fini contient plusieurs couches composites de fibres de carbone-matière synthétique (1, 4), une couche métallique étant disposée entre deux couches composites de ce type (figure 2).

12. Utilisation selon l'une quelconque des revendications précédentes, caractérisée en ce que deux couches (1a, 16) contenant des fibres de carbone sont disposées à distance l'une de l'autre entre deux couches métalliques (2, 3).

13. Utilisation selon l'une quelconque des revendications précédentes, caractérisée en ce que le produit semi-fini ou le produit fini contient deux couches différentes (1, 4) contenant des fibres de carbone.

14. Utilisation selon l'une quelconque des revendications précédentes, caractérisée en ce que les couches sont totalement ou en partie non coïncidentes (figures 3-7 et 9).

15. Utilisation d'un produit semi-fini ou d'un produit fini tel que défini dans l'une quelconque des revendications ci-dessus, à titre de lame de contact électrique à la place de lames de contact constituées par des bilames thermiques.
